# EUROPEAN PATENT SPECIFICATION

(11) **EP 4 161 786 B1**
(45) Date of publication and mention of the grant of the patent: **01.05.2024**
(21) Application number: 21735758.1
(22) Date of filing: 08.06.2021
(51) Int. Cl.: B60C 1/00, C08F 4/64, C08F 236/06, C08F 236/10

(54) **HIGH PERFORMANCE TYRE**
HOCHLEISTUNGSREIFEN
PNEUMATIQUE À HAUTE PERFORMANCE

(30) Priority: 09.06.2020 IT 202000013708
(43) Date of publication of application: 12.04.2023
(73) Proprietor: Pirelli Tyre S.P.A., 20126 Milan (IT)
(72) Inventor: GIANNINI, Luca, 20126 Milan (IT); ZINNA, Marianna, 20126 Milan (IT); PROTO, Antonio, 84084 Fisciano (SA) (IT); CAPACCHIONE, Carmine, 84084 Fisciano (SA) (IT); PARADISO, Veronica, 84084 Fisciano (SA) (IT)
(74) Representative: PGA S.p.A.
(86) International application number: PCT/IB2021/055013
(87) International publication number: WO 2021/250557

(56) References cited:
- EP-A1- 2 307 468
- EP-A1- 3 328 664
- WO-A1-2016/170522
- DE-A1- 10 309 837
- US-A1- 2010 152 387
- STEFANO MILIONE ET AL: "Stereoselective Polymerization of Conjugated Dienes and Styrene - Butadiene Copolymymerization Promoted by Octahedra Titanium Catalyst", MACROMOLECULES, AMERICAN CHEMICAL SOCIETY, WASHINGTON DC UNITED STATES, vol. 40, no. 16, 7 August 2007 (2007-08-07), pages 5638-5643, XP002636684, ISSN: 0024-9297, DOI: 10.1021/MA070543U [retrieved on 2007-07-12]

## Description

### FIELD OF THE INVENTION

The present invention relates to a process for the preparation of a copolymer with a high content of styrene and/or substituted styrene, in particular of a stereoregular copolymer of butadiene with styrene and/or substituted styrene, for use in an elastomeric compound used in the production of tyres or components thereof, such as, for example, the tread.

### PRIOR ART

Some catalysts and processes for the production of polymers and copolymers are described in documents US 3,903,019, US 4,112,210, US 4,129,705, US 4,933,401, US 5,100,965, US 5,753,579, US 6,103,842 and US 6,627,715.

The use of polymers and copolymers for the production of at least one tyre component is described in documents US 4,669,518, US 5,317,062, US 6,429,245, US 6,581,659, US 6,872,772, US 6,889,737, US 7,048,023, US 2004/0039104, US 2004/0177907, EP 1593528, WO2010/006655, EP 2643367B1 and EP3328664B1.

The use of copolymers with a high styrene content in the tyre industry, in particular in elastomeric compounds for making tyre treads, is widely known.

In fact, it is believed that the grip characteristics of the tyre tread, in particular under extreme driving conditions, at high speed and cornering, are positively influenced by the presence of high percentages of styrene in the elastomeric polymers and/or copolymers used for the preparation of the elastomeric compositions. In fact, the use of polymers and/or copolymers with a high styrene content allows the hysteresis values of the finished tyre tread to be increased.

Traditional polymerization and catalysis techniques generally do not allow styrene-butadiene copolymers with styrene monomer percentages greater than 30-40% to be obtained, since the presence of high percentages of styrene during the polymerization process promotes the formation of block copolymers, i.e. copolymers in which 10 or more consecutive units of styrene are present, which may have the typical Tg of polystyrene (+100°C), are thermoplastic and, therefore, are not suitable for the production of tyre treads, as their mechanical properties and abrasion resistance would be drastically compromised.

The Applicant has already provided a solution to the above problems in patent EP2643367B1, in which styrene-butadiene copolymers (in particular, with butadiene in trans conformation and styrene in isotactic configuration) have been described, having a molecular weight lower than 500,000, in particular ranging from about 10,000 to about 100,000, random distribution and styrene content greater than 40% by weight.

In fact, EP2643367B1 describes a process for the production of styrene-butadiene copolymers through the use of a catalyst having general formula (A) 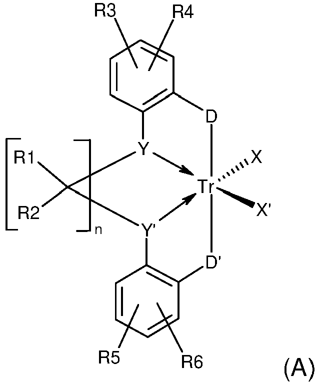 wherein Tr is a transition metal, X and X', equal to or different from each other, are a halogen atom, R1-R2 are a H atom or a linear or branched alkyl group having from 1 to 10 carbon atoms, R3-R6 are a H atom or a linear or branched alkyl group having 1 to 10 carbon atoms, Y and Y' are an oxygen, sulphur, selenium, tellurium atom, or NR7 or PR7 group, D and D' are an oxygen, sulphur, selenium, tellurium atom, or an NR7 or PR7 group, R7 is a H atom or a linear or branched alkyl group having 1 to 10 carbon atoms, and n is an integer from 1 to 10.

As described in EP3328664B1, the Applicant has also found that styrene-butadiene copolymers with molecular weight greater than 500,000 can be obtained using a homogeneous catalyst having the following formula (B):

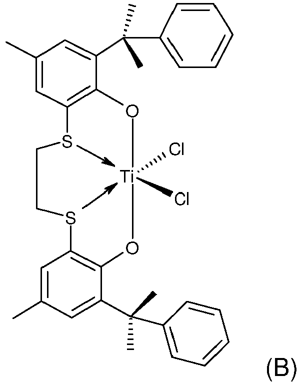

The preparation process described in EP3328664B1 is carried out in toluene in the presence of the aforementioned homogeneous catalyst and the activator compound methylaluminoxane (MAO) at temperatures between 0°C and 25°C for a period of between 24 and 48 hours.

### SUMMARY OF THE INVENTION

Although the conversion yields of the process described in EP2643367B1 and EP3328664B1 were high, the long reaction times and the use of toluene are disadvantageous from an industrial point of view. In fact, industrial production plants preferably use aliphatic hydrocarbons, such as hexane, and reaction times equal to or less than twelve hours.

The Applicant has therefore faced the problem of finding a production process which would allow styrene-butadiene copolymers with reduced solvents and reaction times and with good reaction yields to be obtained.

In an attempt to substitute toluene with industrially usable solvents, such as aliphatic hydrocarbons, and to reduce the reaction times by raising the reaction temperature and using the catalysts described in EP3328664B1, the Applicant observed the formation of an inhomogeneous system with precipitation of the copolymer and formation of a dispersion that is not easily manageable in an industrial plant.

The Applicant has also tried to use catalysts other than those described in EP2643367B1 and EP3328664B1, observing a drastic drop in the reaction yields, and an equally drastic drop in the molecular weight of the resulting copolymer, even lower than 10,000 dalton (Da).

After an extensive experimentation, the Applicant has finally surprisingly found that the use of certain catalysts together with a mixture of activators comprising modified methylaluminoxane (m-MAO) and triisobutylaluminium (TIBA) allowed the problems encountered to be solved, while providing good reaction yields, acceptable molecular weights and formation of a homogeneous system without precipitation of the copolymer.

The Applicant also observed that the conversion percentage and the molecular weight were dependent on the ratio between catalyst and activators. In particular, the Applicant has observed that in order to obtain higher yields and higher molecular weights, the molar ratio between m-MAO and catalyst was preferably equal to or greater than 50:1, more preferably greater than 100:1. Advantageously, the molar ratio between m-MAO and catalyst ranged from 200:1 to 500:1. Preferably, the molar ratio between TIBA and catalyst was greater than 10:1, more preferably not greater than 300:1, even more preferably it ranged from 20:1 to 200:1, and advantageously from 20:1 to 120:1.

Furthermore, the Applicant has observed that the use of paramethylstyrene in partial or total substitution of the styrene increased the conversion percentage and the molecular weight of the resulting copolymer, as well as its solubility in the reaction solvent based on aliphatic hydrocarbons.

The Applicant has also surprisingly observed that the Tg of the resulting polymer was influenced, for the same molecular weight of the copolymer, by the type of catalyst used as well as by the relative amounts of styrene and substituted styrene present in the copolymer, thus providing an instrument for modulating the Tg depending on the desired purposes.

According to the Applicant's experience, the styrene component of a styrene-butadiene copolymer determines an increase in the hysteresis of the copolymer with respect to the butadiene homopolymer and therefore has a favourable effect on the grip and on the driving properties in extreme conditions. The styrenic component in particular determines an increase in the glass transition temperature (Tg) of the copolymer with respect to the homopolymer and such increase in Tg in turn leads to an increase in the dissipation of the compounds based on such copolymers and therefore to the desired effect on the grip. However, the increase in Tg also leads to drawbacks: at temperatures close to Tg, the compound is very stiff and therefore the grip is compromised, despite the high hysteresis.

Depending on the operating range of the tyre (summer, winter, all-season, sports) and the pattern of the hysteresis curve of the compound, the experimentation allows an optimal Tg value for the copolymer to be identified, which maximizes the hysteresis effect keeping the stiffening of the compound at tolerable levels. For example, in the extreme case of competition tyres, the Tg of the tread compound may be higher than 0°C. While for tyres for road use, even in summer, it will be of the order of -25°C.

The Applicant has therefore unexpectedly observed that the process of the present invention provided the possibility of obtaining polymers with controlled Tg by leveraging process parameters as well as the most obvious composition parameter, that is the amount of styrene incorporated in the polymer. This possibility, in particular the possibility of obtaining higher Tg for the same amount of styrene, is particularly interesting since a high amount of styrene can lead to problems of lower solubility of the copolymer in the other polymeric phases present in the compound, and lower reactivity towards the vulcanisation system since the styrene unit, once incorporated in the copolymer, has no groups reactive with the vulcanisation system.

Therefore, a first aspect of the present invention consists of a process for the copolymerization of butadiene and styrene and/or substituted styrene comprising (i) preparing a solution of butadiene and styrene and/or substituted styrene in a solvent, (ii) adding a homogeneous catalytic system to said solution, (iii) conducting the copolymerization reaction at a temperature ranging from 30°C to 100°C for 12 hours or less, and (iv) recovering the resulting copolymer,
characterised in that
said solvent is selected from the group of aliphatic and cycloaliphatic hydrocarbons, and
said homogeneous catalytic system comprises
   (a) a catalyst with general formula (I) 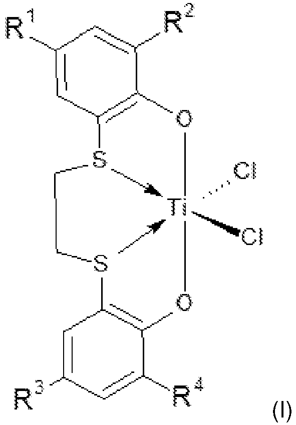 wherein R¹ and R³, equal or different from each other, are a linear or branched alkyl group having from 1 to 10 carbon atoms, and R² and R⁴, equal or different from each other, are a linear or branched arylalkyl group having from 7 to 14 carbon atoms, and
   (b) a mixture of co-catalysts comprising modified methylaluminoxane (m-MAO) and triisobutylaluminium (TIBA).

A second aspect of the present invention consists in the use of the copolymer obtained with the process of the first aspect of the present invention in an elastomeric compound used for the production of a component of a tyre for vehicle wheels.

A third aspect of the present invention consists in the tyre for vehicle wheels comprising a cross-linked elastomeric material obtained by cross-linking a cross-linkable elastomeric compound, wherein said elastomeric compound comprises a copolymer obtained with the process of the first aspect of the present invention.

### DRAWINGS

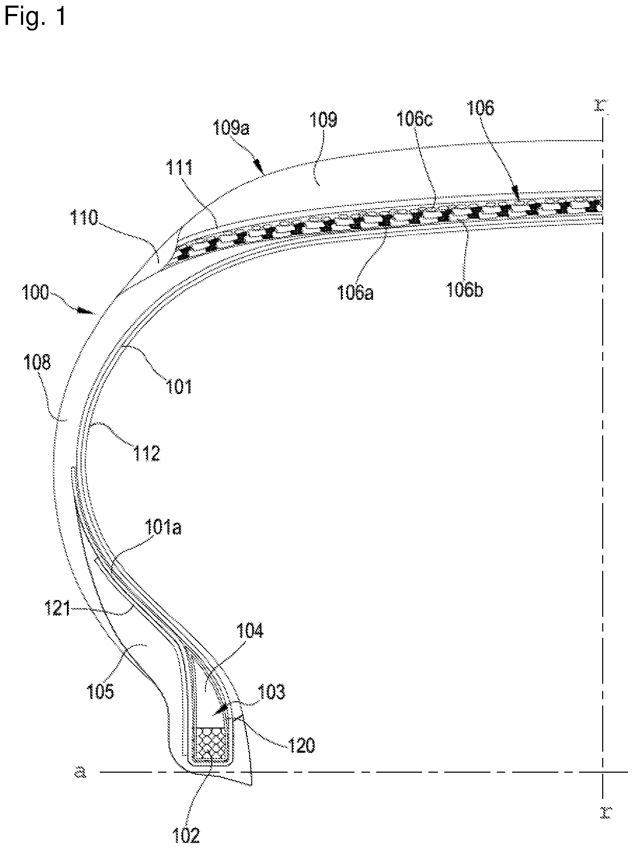

Figure 1 shows a cross-sectional view of a portion of a tyre.

### DETAILED DESCRIPTION OF THE INVENTION

The process of the first aspect of the present invention uses a mixture of co-catalysts comprising modified methylaluminoxane (m-MAO) and triisobutylaluminium (TIBA).

According to a preferred aspect of the first aspect of the present invention, the molar ratio between said m-MAO and said catalyst is equal to or greater than 50:1, preferably greater than 100:1, more preferably ranging from 150:1 to 1000:1, and advantageously ranging from 200:1 to 500:1.

Methylaluminoxane (MAO) and its modified form (m-MAO) are known and commercially available co-catalysts. Useful examples of m-MAOs are sold by the companies AzkoNobel (Holland) and Albemarle (USA). The generally accepted structural formula of methylaluminoxane is

(R)₂AIO(RAIO)ₘAI(R)₂

where R is predominantly methyl and m is an integer between 0 and 50. For the purposes of the present description and of the following claims, the term "m-MAO" or "modified methylaluminoxane" means a methylaluminoxane in which a certain fraction of the methyl groups is substituted with longer alkyls, having from 2 to 6 atoms of carbon, such as ethyl, propyl and butyl, in order to increase the solubility of the MAO thus modified in aliphatic solvents.

According to a preferred aspect of the first aspect of the present invention, the molar ratio between said TIBA and said catalyst is greater than 10:1 and preferably not greater than 300:1, and more preferably ranging from 20:1 to 200:1, and even more preferably from 20:1 to 120:1.

Triisobutylaluminium is a known catalyst commercially available for example from the company Witco GmbH (Germany). The generally accepted structural formula of triisobutylaluminium is

(iBu)₃AI

where iBu is the iso-butyl group.

The process of the first aspect of the present invention uses a solvent selected from the group of aliphatic and cycloaliphatic hydrocarbons, preferably having a number of carbon atoms ranging from 5 to 10.

According to a preferred aspect of the first aspect of the present invention, said solvent is selected from the group consisting of pentane, hexane, cyclohexane, heptane, and mixtures thereof.

The process of the first aspect of the present invention uses a catalyst having general formula (I)

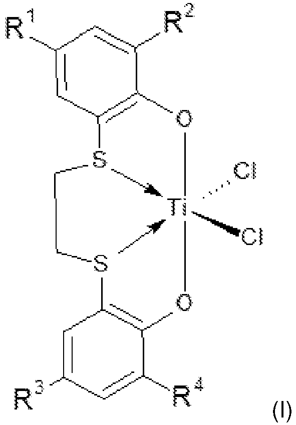

According to a preferred aspect of the first aspect of the present invention, R¹ and R³, equal or different from each other, are a linear or branched alkyl group having from 1 to 6 carbon atoms.

According to a preferred aspect of the first aspect of the present invention, R¹ and R³, equal or different from each other, are a linear or branched alkyl group selected from the group consisting of methyl, ethyl, propyl, isopropyl, butyl, isobutyl, tert-butyl, pentyl, isopentyl, 2-methyl-butan-2-yl, 1-hexyl, 2-methyl-pentan-2-yl, 3-methyl-pentan-3-yl, and isohexyl.

According to a preferred aspect of the first aspect of the present invention, R² and R⁴, equal or different from each other, are a linear or branched arylalkyl group having from 7 to 10 carbon atoms.

According to a preferred aspect of the first aspect of the present invention, R² and R⁴, equal or different from each other, are a linear or branched arylalkyl group selected from the group consisting of the compounds of general formula (2) 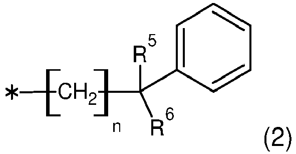 wherein R⁵ and R⁶, equal or different from each other, are hydrogen or a linear or branched alkyl group having from 1 to 3 carbon atoms, and n is a integer from 0 to 3, provided that the total number of carbon atoms of said compounds of the general formula (II) is from 7 to 10.

According to a preferred aspect of the first aspect of the present invention, said catalyst is present in an amount ranging from 0.0001% to 0.01 % by mole, preferably from 0.0005% to 0.005% by mole, with respect to the total molar weight of said butadiene and styrene and/or substituted styrene.

The process of the first aspect of the present invention provides for conducting the copolymerization reaction at a temperature ranging from 30°C to 100°C for a time equal to or less than 12 hours.

According to a preferred aspect of the first aspect of the present invention, said copolymerization reaction is conducted at a temperature ranging from 40°C to 90°C, advantageously from 50°C to 80°C.

According to a preferred aspect of the first aspect of the present invention, said copolymerization reaction is carried out for a time equal to or lower than 10 hours, more preferably for a time equal to or lower than 6 hours, advantageously for a time equal to or lower than 3 hours.

According to a preferred aspect of the first aspect of the present invention, said copolymerization reaction is carried out at atmospheric pressure.

According to a preferred aspect of the first aspect of the present invention, said solution of butadiene and styrene and/or substituted styrene comprises butadiene in an amount ranging from 10% to 70% by weight, styrene in an amount ranging from 0% to 90% by weight, and substituted styrene in an amount ranging from 90% to 0% by weight, with respect to the total weight of butadiene, styrene and/or substituted styrene contained in said solution.

According to a preferred aspect of the first aspect of the present invention, said solution comprises a total concentration of butadiene and styrene and/or substituted styrene equal to or greater than 2%, preferably equal to or greater than 5%, and advantageously ranging from 7% to 30% by weight with respect to the total weight of said solution.

The copolymerization process is preferably carried out under controlled reaction conditions, i.e. with the exclusion of oxygen and humidity. If desired, an inert gas such as argon or nitrogen can be used. The polymerization reaction begins with the addition of the catalyst to the solution of the comonomers and the mixture of co-catalysts and bringing the temperature to the desired value. The catalyst can be added as such or in solution.

The copolymerization process is interrupted by adding a protic compound, for example a low molecular weight alcohol, such as methanol, ethanol, and isopropanol, optionally acidified, or by removing the solvent.

The copolymer formed is generally solid and can be recovered by conventional techniques, such as decantation, filtration, centrifugation, and so on. The copolymer can then be purified by conventional techniques, such as washing or steam extraction, to remove impurities, typically represented by volatile organic compounds.

The copolymer resulting from the process of the first aspect of the present invention has a stereoregular conformation, in particular, with butadiene in trans conformation and styrene and/or substituted styrene in isotactic configuration, and random distribution.

For the purposes of the present description and of the following claims, the term "copolymer" is intended to include the styrene/butadiene copolymer, the substituted styrene/butadiene copolymer, and/or the styrene/substituted styrene/butadiene copolymer resulting from the process of the first aspect of the present invention.

By trans conformation of butadiene, it is meant the geometric arrangement of the butadiene monomers in which the two single chain propagation bonds are arranged on opposite sides with respect to the central double bond, as represented in the following structural formula:

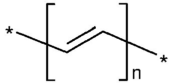

By isotactic configuration of styrene or substituted styrene, it is meant the isotactic arrangement of monomers of styrene or substituted styrene, i.e. the arrangement in which the carbon atoms carrying the styrene or substituted styrene groups have the same relative configuration and the styrene or substituted styrene groups have the same spatial arrangement with respect to the plane (i.e. the styrene groups are both arranged above or both below the plane), as represented in the following structural formula (where R is hydrogen or substituent group):

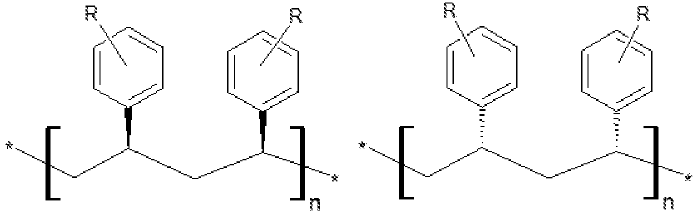

By random arrangement of the copolymer, it is meant the random arrangement of the butadiene, styrene and/or substituted styrene monomers in the polymer chain.

Preferably, the term substituted styrene means a compound of formula S-R, where S is a styrene residue and R can be a substituent group, preferably linked in a para or ortho position with respect to the vinyl group, selected from the group consisting of linear or branched alkyl radical containing from 1 to 20 carbon atoms, preferably from 1 to 10, more preferably from 1 to 5, linear or branched alkenyl radical containing from 2 to 20 carbon atoms, preferably from 2 to 10, more preferably from 2 to 5, halogen or radical containing one or more silicon atoms.

Advantageously, the substituted styrene monomer is selected from the group consisting of p-methylstyrene, o-methylstyrene, p-isopropylstyrene, p-terbutylstyrene, p-fluorostyrene, p-chlorostyrene, and p-trimethylsilylstyrene.

Preferably, the copolymer obtained by the process of the first aspect of the present invention has a dispersion index (D) of the molecular weight ranging from 1 to 5, more preferably from 1.5 to 3.5. The dispersion index is calculated through the relationship D = Mw/Mn, where Mw represents the weight average molecular weight and Mn represents the number average molecular weight.

The second and third aspects of the present invention both relate, from different perspectives to a tyre for vehicle wheels and an elastomeric compound used for the production thereof.

According to a preferred aspect of the second and third aspects of the present invention, said tyre comprises:
- a carcass structure, having opposite side edges associated with respective bead structures;
- optionally, a belt structure applied in a radially external position with respect to said carcass structure;
- a tread band applied in a radially external position with respect to said carcass and/or belt structure.

According to a preferred aspect of the second and third aspects of the present invention, said elastomeric compound is used for the production of said tread band.

According to a preferred aspect of the second and third aspects of the present invention, said elastomeric compound comprises an amount of said copolymer ranging from 1 to 30 phr, preferably ranging from 5 to 20 phr, and more preferably ranging from 7 to 15 phr.

According to a preferred aspect of the second and third aspects of the present invention, said copolymer has a molecular weight lower than 500,000, preferably lower than 300,000, more preferably lower than 200,000, and even more preferably ranging from 50,000 to 200,000.

According to a preferred aspect of the second and third aspects of the present invention, said copolymer has a butadiene content ranging from 30% to 90%, preferably ranging from 40% to 80% by weight with respect to the total weight of copolymer, and a styrene and/or substituted styrene content ranging from 10% to 70% by weight, preferably ranging from 20% to 60% by weight with respect to the total weight of copolymer.

Advantageously, the copolymer co-crosslinks with the cross-linkable elastomeric compound during the vulcanisation process.

In the present description, the term "elastomeric compound" refers to the product obtained by mixing and, optionally, heating at least one elastomeric polymer with at least one of the additives commonly used in the preparation of tyre compounds and with the copolymer described herein.

By the expression "elastomeric polymer" or "rubber" it is meant a natural or synthetic polymer which, after vulcanisation, at room temperature can be stretched repeatedly to at least twice its original length and which, after removal of the tensile load substantially immediately returns with force to approximately its original length (according to the definitions of the ASTM D1566-11 Standard terminology relating to Rubber).

The elastomeric polymer can be selected from those commonly used in sulphur cross-linkable elastomeric materials, which are particularly suitable for producing tyres, i.e. from elastomeric polymers or copolymers with an unsaturated chain having a glass transition temperature (Tg) generally lower than 20°C, preferably within the range of 0°C to -110°C. These polymers or copolymers may be of natural origin or may be obtained by polymerization in solution, emulsion polymerization or polymerization in gaseous phase of one or more conjugated diolefins, optionally mixed with at least one comonomer selected from monovinylarenes and/or polar comonomers in an amount not higher than 60% by weight.

Preferably, the diene elastomeric polymer may be selected, for example, from: cis-1,4-polyisoprene (natural or synthetic, preferably natural rubber), 3,4-polyisoprene, polybutadiene (in particular polybutadiene with a high content of 1,4-cis), optionally halogenated isoprene/isobutene copolymers, 1,3-butadiene/acrylonitrile copolymers, styrene/1,3-butadiene copolymers, styrene/isoprene/1,3-butadiene copolymers, styrene/1,3-butadiene/acrylonitrile copolymers, and mixtures thereof.

Examples of additives commonly used in the preparation of tyre compounds are represented by (a) reinforcing fillers, such as carbon black and/or silica, (b) coupling agents, typically comprising a silane group, (c) vulcanising agents, such as sulphur or sulphur derivatives, (d) accelerating agents, such as dithiocarbamates, guanidine, thiourea, thiazoles, sulfenamides, thiurams, amines, xanthates and mixtures thereof, (e) activators, typically zinc and/or zinc compounds, (f) retardant agents, (g) antioxidants, (h) anti-ageing agents, (i) adhesives, (I) anti-ozone agents, (m) modifying resins, or mixtures thereof.

Figure 1 shows a cross half-section showing a tyre for motor vehicle wheels according to an embodiment of the second and third aspect of the present invention.

In Figure 1, "a" indicates an axial direction and "X" indicates a radial direction, in particular X-X indicates the outline of the equatorial plane. For simplicity, Figure 1 shows only a portion of the tyre, the remaining portion not shown being identical and arranged symmetrically with respect to the equatorial plane "X-X".

Tyre 100 for vehicle wheels comprises at least one carcass structure, comprising at least one carcass layer 101 made of an elastomeric compound having respectively opposite end flaps 101a engaged with respective annular anchoring structures 102, referred to as bead cores, possibly associated to a bead filler 104. The tyre area comprising the bead core 102 and the filler 104 forms a bead structure 103 intended for anchoring the tyre onto a corresponding mounting rim, not shown. A reinforcing layer 120 consisting of a plurality of textile cords incorporated within a layer of elastomeric compound, generally known as "flipper", can be added between the at least one carcass layer 101 and the bead structure 103. A protective layer 121 consisting of a plurality of cords incorporated within an elastomeric compound rubber layer, generally known as "chafer", can be added between the at least one carcass layer 101 and the anti-abrasive strip 105. The carcass structure is associated to a belt structure 106 comprising one or more belt layers 106a, 106b placed in radial superposition with respect to one another and with respect to the carcass layer, having typically textile and/or metallic reinforcement cords incorporated within a layer of elastomeric compound. In a radially outermost position to the belt layers 106a, 106b, at least one zero degree reinforcement layer 106c, commonly known as "0° belt", can be applied, which incorporates typically textile and/or metal reinforcement cords incorporated within a layer of elastomeric compound. In a radially external position with respect to the belt structure 106 there is applied a tread band 109 made of an elastomeric compound comprising at least one butadiene and styrene and/or substituted styrene copolymer obtained by the process described above.

In a radially external position, the tread band 109 has a rolling portion 109a intended to come in contact with the ground. Circumferential grooves, which are connected by transverse notches (not shown in Figure 1) so as to define a plurality of blocks of various shapes and sizes distributed in the rolling portion 109a, are generally made in this portion 109a, which for simplicity is represented smooth in Figure 1.

To optimise the performance of the tread, the tread band can be made in a two-layer structure.

Such two-layer structure comprises the rolling layer or portion 109a (called cap) and a substrate 111 (called base) forming the so-called cap-and-base structure. It is thus possible to use an elastomeric material capable of providing a low rolling resistance for the cap and at the same time high resistance to wear and to the formation of cracks while the elastomeric material of the substrate can be particularly aimed at a low hysteresis to cooperate to the reduction of the rolling resistance one or both layers can be made of an elastomeric material comprising at least one butadiene and styrene and/or substituted styrene copolymer obtained by the process described above.

The Applicant believes, in fact, that the copolymer described above can find advantageous application, in addition to the tread, also in other components of the tyre.

Moreover, respective sidewalls 108 of elastomeric compound are applied in an axially external position on the lateral surfaces of the carcass structure, each extending from one of the lateral edges of the tread band 109 at the respective bead structure 103.

Optionally, an anti-abrasive strip 105 made of an elastomeric material comprising at least one butadiene and styrene and/or substituted styrene copolymer obtained by the process described above is arranged in an external position of each bead structure 103 so as to envelop the bead structure 103 along the axially internal and external and radially internal areas of the bead structure 103, thus interposing between the latter and the wheel rim when the tyre 100 is mounted on the rim.

A strip 110 consisting of an elastomeric compound, commonly known as a "mini-sidewall", may possibly be present in the connection area between the sidewalls 108 and the tread band 109. In the case of tubeless tyres, a rubber layer 112, generally known as "liner", which provides the necessary impermeability to the inflation air of the tyre, can also be provided in a radially internal position with respect to the carcass layer 101.

The present invention will be further illustrated below by means of a number of preparatory examples, which are provided for indicative purposes only and without any limitation of the present invention.

For the purposes of the present description and of the following claims, unless indicated otherwise, all the numbers expressing quantities, values, percentages and so on must be interpreted as modified in all cases by the term "about". Furthermore, all ranges include any combination of the maximum and minimum points described and include any intermediate range, which may or may not have been specifically listed herein.

### EXAMPLES

### EXAMPLE 1

The hexane solvent, the styrene monomer and the m-MAO activator (m-MAO3A - AkzoNobel, Netherlands) were added to a flask provided with a magnetic stirrer at room temperature. After cooling the mixture to 0°C, butadiene in solution was added. After stirring for about twenty minutes, the catalyst was added to the solution, and the reaction was conducted at the temperature and for the time indicated in the following Table 1. The reaction was ended by adding ethanol, then the solution was poured into an acidified solution of ethanol and butylated hydroxytoluene (BHT). The precipitated copolymer was recovered by filtration, and dried in an oven under vacuum at 40°C.

The amounts of the components of the reaction solution and the reaction conditions are summarised in the following Table 1.

**TABLE 1**

| | |
|---|---|
| Butadiene | 14 g |
| Styrene | 9.3 g |
| Catalyst 1 (CAT1) | 10 pmoles |
| m-MAO:CAT1 ratio | 500:1 |
| Hexane | 130 ml |
| Reaction temperature | 70°C |
| Reaction time | 3 hours |

Catalyst 1, present in an amount equal to about 0.003% by mole (with respect to the total moles of styrene and butadiene), had the following formula, where Ph represents a phenyl group:

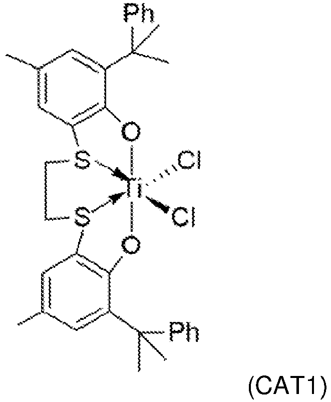

The reaction yield was 59% obtaining a styrene-butadiene copolymer with a weight average molecular weight (Mw) equal to about 191,000 dalton (Da) and a polydispersibility index equal to 2.2.

During the reaction, the formation of an inhomogeneous dispersion by precipitation of the copolymer was observed. The precipitation of the copolymer during the reaction, resulting in the formation of an inhomogeneous system, is disadvantageous in an industrial process.

### EXAMPLE 2

The procedure of Example 1 was repeated with the amounts of the components of the reaction solution and the reaction conditions indicated in Table 2.

**TABLE 2**

| | |
|---|---|
| Butadiene | 4.50 g |
| Styrene | 2.73 g |
| Catalyst 2 (CAT2) | 25 pmoles |
| m-MAO:CAT2 ratio | 500:1 |
| Hexane | 40 ml |
| Reaction temperature | 50°C |
| Reaction time | 4 hours |

Catalyst 2, present in an amount equal to about 0.02% by mole (with respect to the total moles of styrene and butadiene), had the following formula:

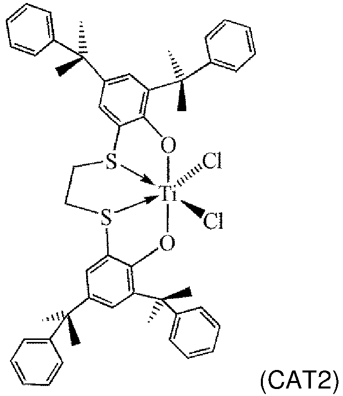

The reaction yield was 27% obtaining a styrene-butadiene copolymer with a weight average molecular weight (Mw) equal to about 25,000 dalton (Da) and a polydispersibility index equal to 1.6.

During the reaction, the solution remained clear or slightly opaque, with the formation of a light precipitate which did not affect the homogeneity of the mixture. The reaction yield and the molecular weight were considered too low, and therefore disadvantageous both from an industrial point of view and from an applicative point of view.

### EXAMPLE 3

The procedure of Example 1 was repeated with the amounts of the components of the reaction solution and the reaction conditions indicated in Table 3.

**TABLE 3**

| | |
|---|---|
| Butadiene | 14 g |
| Styrene | 6 g |
| Catalyst 3 (CAT3) | 10 pmoles |
| m-MAO:CAT3 ratio | 500:1 |
| Hexane | 130 ml |
| Reaction temperature | 70°C |
| Reaction time | 16 hours |

Catalyst 3, present in an amount equal to about 0.003% by mole (with respect to the total moles of styrene and butadiene), had the following formula, where Ad represents an adamantyl group:

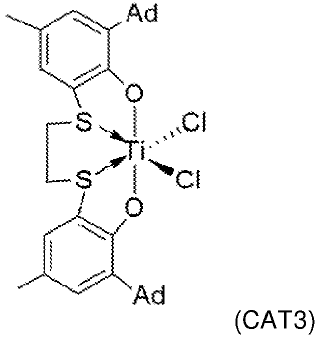

The reaction yield was 10% obtaining a styrene-butadiene copolymer with a weight average molecular weight (Mw) equal to about 20,000 dalton (Da) and a polydispersibility index equal to 1.7.

During the reaction, the solution remained clear or slightly opaque, with the formation of a light precipitate which did not affect the homogeneity of the mixture. The reaction yield and the molecular weight were considered too low, despite a very long reaction time, and therefore disadvantageous both from an industrial point of view and from an applicative point of view.

### EXAMPLE 4

The procedure of Example 1 was repeated with the amounts of the components of the reaction solution and the reaction conditions indicated in Table 4.

**TABLE 4**

| | |
|---|---|
| Butadiene | 14 g |
| Styrene | 6 g |
| Catalyst 4 (CAT4) | 10 pmoles |
| m-MAO:CAT4 ratio | 500:1 |
| Hexane | 130 ml |
| Reaction temperature | 70°C |
| Reaction time | 16 hours |

Catalyst 4, present in an amount equal to about 0.003% by mole (with respect to the total moles of styrene and butadiene), had the following formula, where Ph represents a phenyl group:

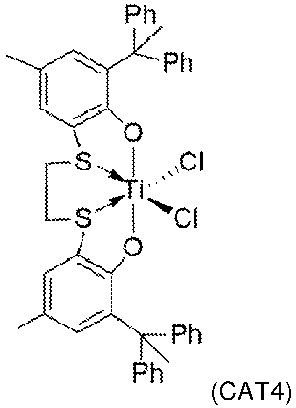

The reaction yield was 90% obtaining a styrene-butadiene copolymer with a weight average molecular weight (Mw) equal to about 125,000 dalton (Da) and a polydispersibility index equal to 2.2.

During the reaction, the solution remained clear or slightly opaque, with the formation of a light precipitate which did not affect the homogeneity of the mixture. The reaction time necessary to achieve an acceptable yield and molecular weight was equal to 16 hours, which is disadvantageous from an industrial point of view.

### EXAMPLE 5

The process of Example 1 was repeated with the amounts of the components of the reaction solution and the reaction conditions indicated in Table 5, adding triisobutylaluminium (TIBA - Witco GmbH, Germany) together with the m-MAO.

**TABLE 5**

| | 1 | 2 |
|---|---|---|
| Butadiene | 14 g | 14 g |
| Styrene | 9.3 g | 9.3 g |
| Catalyst 1 (CAT1) | 10 pmoles | 10 pmoles |
| m-MAO:CAT1 ratio | 500:1 | 500:1 |
| TIBA/CAT1 ratio | - | 80:1 |
| Hexane | 130 ml | 130 ml |
| Reaction temperature | 70°C | 70°C |
| Reaction time | 3 hours | 3 hours |

The results in terms of conversion yield (Conv. %), weight average molecular weight (Mw) and polydispersion index (D) are summarised in the following Table 5A.

**TABLE 5A**

| | Conv. % | Mw (Da) | D | Appearance |
|---|---|---|---|---|
| 1 | 59.0 | 191,000 | 2.2 | Cloudy |
| 2 | 49.0 | 100,000 | 2.2 | Clear |

Surprisingly, no precipitation was observed in Test 2, and the reaction solution remained clear until the reaction was completed.

The reaction yield of Test 2 and the molecular weight of the resulting copolymer, although lower than those of the previous tests, were maintained at good levels, with reaction times entirely compatible with an industrial process.

### EXAMPLE 6

The procedure of Test 2 of Example 5 was repeated with the same amounts of the components of the reaction solution and the reaction conditions indicated in Table 5, but using catalyst 5 (CAT5), having the following formula, where Ph represents a phenyl group:

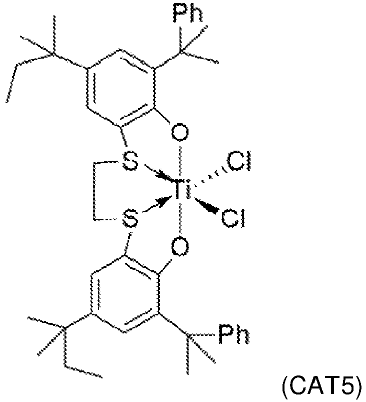

The conversion yield was found to be 75%, obtaining a copolymer with a weight average molecular weight of approximately 184,000 Da and a polydispersion index of approximately 2.2. Also in this test, no precipitation was observed and the reaction solution remained clear until the reaction was completed.

By comparing the data of the copolymer obtained with example 5 (obtained with catalyst 1) with the data of the copolymer obtained in this example (with catalyst 5), it was surprisingly observed that the glass transition temperature (Tg) of the latter copolymer (-35.0°C) was higher than the Tg of the first (-43.4°C), despite having similar composition and molecular weight.

Such feature can be useful in the use of such copolymers in elastomeric compounds for the production of tyres because by suitably varying the process conditions, with the same styrene content and molecular weight of the copolymer, it is possible to advantageously identify optimal values of Tg for different types of tyres (summer, winter, all-season, sports).

### EXAMPLE 7

The procedure of Test 2 of Example 5 was repeated using different relative amounts of styrene and butadiene for different reaction times with catalysts 1 and 5, present in amounts equal to about 0.003% by mol (with respect to the total moles of styrene and butadiene), maintaining the m-MAO:CATn ratio equal to 500 and the TIBA/CATn ratio equal to 80.

The following Tables 7A, 7B and 7C summarise the results obtained at reaction times of 3, 6 and 10 hours with a styrene:butadiene weight ratio equal to 30:70, 35:65 and 40:60, respectively. The following Table 7D summarises the results obtained with a reaction time of 3 hours with a styrene:butadiene weight ratio equal to 50:50. The reaction temperature is always 70°C.

**TABLE 7A**

| STYRENE 30% - BUTADIENE 70% | | | | | | |
|---|---|---|---|---|---|---|
| Test | CATn | Time (h) | Conv. % | Tg | Mw | D |
| 1 | 1 | 3 | 47 | -50.8 | 164 | 2.0 |
| 2 | 5 | 3 | 53 | -45.2 | 229 | 2.4 |
| 3 | 1 | 6 | 73 | -46.6 | 172 | 2.3 |
| 4 | 5 | 6 | 74 | -41.6 | 195 | 2.3 |
| 5 | 1 | 10 | 90 | -52.0 | 164 | 2.2 |
| 6 | 5 | 10 | 85 | -41.4 | 194 | 2.4 |

**TABLE 7B**

| STYRENE 35% - BUTADIENE 65% | | | | | | |
|---|---|---|---|---|---|---|
| Test | CATn | Time (h) | Conv. % | Tg | Mw | D |
| 1 | 1 | 3 | 51 | -46.4 | 131 | 1.7 |
| 2 | 5 | 3 | 54 | -38.2 | 170 | 1.8 |
| 3 | 1 | 6 | 73 | -46.6 | 183 | 2.3 |
| 4 | 5 | 6 | 69 | -30.6 | 184 | 2.3 |
| 5 | 1 | 10 | 82 | -40.6 | 204 | 2.4 |
| 6 | 5 | 10 | 81 | -37.3 | 232 | 2.1 |

**TABLE 7C**

| STYRENE 40% - BUTADIENE 60% | | | | | | |
|---|---|---|---|---|---|---|
| Test | CATn | Time (h) | Conv. % | Tg | Mw | D |
| 1 | 1 | 3 | 44 | -36.9 | 130 | 1.7 |
| 2 | 5 | 3 | 46 | -27.5 | 136 | 1.8 |
| 3 | 1 | 6 | 74 | -43.4 | 167 | 2.0 |
| 4 | 5 | 6 | 75 | -35.0 | 184 | 2.2 |
| 5 | 1 | 10 | 81 | -33.6 | 182 | 2.6 |
| 6 | 5 | 10 | 77 | -26.4 | 176 | 2.2 |

**TABLE 7D**

| STYRENE 50% - BUTADIENE 50% | | | | | | |
|---|---|---|---|---|---|---|
| Test | CATn | Time (h) | Conv. % | Tg | Mw | D |
| 1 | 1 | 3 | 46 | -24.6 | 140 | 1.9 |
| 2 | 5 | 3 | 53 | -4.2 | 99 | 1.6 |

The experimentation carried out confirmed that the procedure allows clear solutions to be obtained with good yield and molecular weight values and with reaction times ranging from 6 to 10 hours at different percentages of styrene/butadiene, even with percentages of styrene equal to 50% w/w.

It was also confirmed that the use of the catalyst 5 allows styrene:butadiene copolymers to be obtained with Tg values higher than those deriving from the use of the Catalyst 1, also observing that, under the same conditions, the Tg increases with the increase in the styrene percentage.

### EXAMPLE 8

The procedure of Example 1 was repeated by carrying out the reaction at 70°C for 3 hours, partially substituting the styrene (S) with paramethylstyrene (PMS) and keeping the amount of butadiene (BD) constant as indicated in Table 8, using Catalyst 1 in an amount equal to about 0.003% by mol (with respect to the total moles of monomers used), and with m-MAO:CAT1 and TIBA/CAT1 ratios equal to 500:1 and 80:1, respectively.

In Test 4 and 5, the TIBA/CAT1 ratio was increased to 180:1 and in Test 5 the reaction time was extended to 4 hours.

**TABLE 8**

| Test | S (%) | PMS (%) | BD (%) | Conv. % | Appearance | Mw (Da) | D |
|---|---|---|---|---|---|---|---|
| 1 | 40 | 0 | 60 | 49 | Clear | 100 | 1.63 |
| 2 | 25 | 15 | 60 | 84 | Clear | 160 | 2.05 |
| 3 | 10 | 30 | 60 | 90 | Clear | 159 | 2.09 |
| 4 | 0 | 40 | 60 | 89 | Clear | 164 | 1.80 |
| 5 | 0 | 40 | 60 | 95 | Clear | 194 | 1.90 |

In the system used, the conversion percentage and the molecular weight are increased directly proportional to the increase in the paramethylstyrene content. The increase in the reaction time of Test 5 resulted in an almost quantitative yield (95%) and the formation of a polymer with a high molecular weight.

## Claims

1. A process for the copolymerization of butadiene and styrene and/or substituted styrene comprising (i) preparing a solution of butadiene and styrene and/or substituted styrene in a solvent, (ii) adding a homogeneous catalytic system to said solution, (iii) conducting the copolymerization reaction at a temperature ranging from 30°C to 100°C for 12 hours or less, and (iv) recovering the resulting copolymer,
**characterised in that**
said solvent is selected from the group of aliphatic and cycloaliphatic hydrocarbons, and
said homogeneous catalytic system comprises
(a) a catalyst with general formula (I) 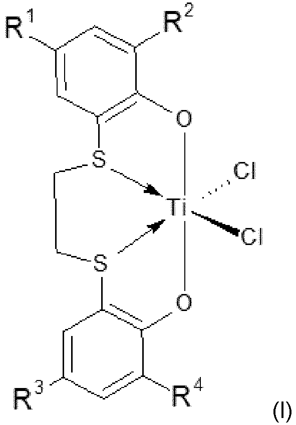 wherein R¹ and R³, equal or different from each other, are a linear or branched alkyl group having from 1 to 10 carbon atoms, and R² and R⁴, equal or different from each other, are a linear or branched arylalkyl group having from 7 to 14 carbon atoms, and
(b) a mixture of co-catalysts comprising modified methylaluminoxane (m-MAO) and triisobutylaluminium (TIBA).

2. The process of copolymerization according to claim 1, wherein the molar ratio between said m-MAO and said catalyst is equal to or greater than 50.

3. The process of copolymerization according to claim 1, wherein the molar ratio between said TIBA and said catalyst is greater than 10:1.

4. The process of copolymerization according to claim 1, wherein R¹ and R³, equal or different from each other, are a linear or branched alkyl group having from 1 to 6 carbon atoms.

5. The process of copolymerization according to claim 1, wherein R¹ and R³, equal or different from each other, are a linear or branched alkyl group selected from the group consisting of methyl, ethyl, propyl, isopropyl, butyl, isobutyl, tert-butyl, pentyl, isopentyl, 2-methyl-butan-2-yl, 1-hexyl, 2-methyl-pentan-2-yl, 3-methyl-pentan-3-yl, and isohexyl.

6. The process of copolymerization according to claim 1, wherein R² and R⁴, equal or different from each other, are a linear or branched arylalkyl group having from 7 to 10 carbon atoms.

7. The process of copolymerization according to claim 1, wherein R² and R⁴, equal or different from each other, are a linear or branched arylalkyl group selected from the group consisting of the compounds of general formula (II) 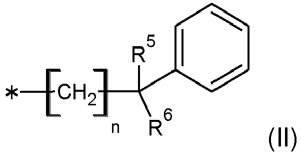 wherein R⁵ and R⁶, equal or different from each other, are hydrogen or a linear or branched alkyl group having from 1 to 3 carbon atoms, and n is a integer from a to 3, provided that the total number of carbon atoms of said compounds of the general formula (II) is from 7 to 10.

8. The process of copolymerization according to claim 1, wherein said catalyst is present in an amount ranging from 0.0001% to 0.01 % by mole, with respect to the total molar weight of said butadiene and styrene and/or substituted styrene.

9. The process of copolymerization according to claim 1, wherein said solution comprises a total concentration of butadiene and styrene and/or substituted styrene equal to or greater than 2% by weight with respect to the total weight of said solution.

10. A tyre for vehicle wheels comprising a cross-linked elastomeric material obtained by cross-linking a cross-linkable elastomeric compound, wherein said cross-linkable elastomeric compound comprises a copolymer obtained by the process according to any one of claims 1 to 9.

11. Tyre according to claim 10, wherein said tyre comprises:
- a carcass structure, having opposite side edges associated with respective bead structures;
- optionally, a belt structure applied in a radially external position with respect to said carcass structure;
- a tread band applied in a radially external position with respect to said carcass and/or belt structure.

12. Tyre according to any one of claims 10 and 11, wherein said elastomeric compound is used for the production of said tread band.

13. Tyre according to any one of claims 10 to 12, wherein said elastomeric compound comprises an amount of said copolymer ranging from 1 to 30 phr.

14. Tyre according to any one of claims 10 to 13, wherein said copolymer has a molecular weight lower than 500,000.

15. Tyre according to any one of the claims 10 to 14, wherein said copolymer has a butadiene content ranging from 30% to 90% by weight with respect to the total weight of copolymer, and a styrene and/or substituted styrene content ranging from 10% to 70% by weight by weight with respect to the total weight of copolymer.

## Patentansprüche

1. Verfahren zur Copolymerisation von Butadien und Styrol und/oder substituiertem Styrol, umfassend (i) Herstellen einer Lösung von Butadien und Styrol und/oder substituiertem Styrol in einem Lösungsmittel, (ii) Zugeben eines homogenen katalytischen Systems zu dieser Lösung, (iii) Durchführen der Copolymerisationsreaktion bei einer Temperatur im Bereich von 30 °C bis 100 °C für 12 Stunden oder weniger und (iv) Gewinnen des resultierenden Copolymers,
**dadurch gekennzeichnet, dass**
das Lösungsmittel aus der Gruppe aliphatischer und cycloaliphatischer Kohlenwasserstoffe ausgewählt ist, und
wobei das homogene katalytische System Folgendes umfasst:
(a) einen Katalysator mit der allgemeinen Formel (I) 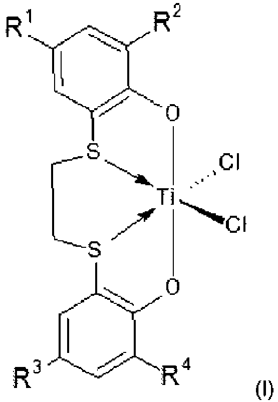 wobei R¹ und R³, gleich oder verschieden voneinander, eine lineare oder verzweigte Alkylgruppe mit 1 bis 10 Kohlenstoffatomen sind und R² und R⁴, gleich oder verschieden voneinander, eine lineare oder verzweigte Arylalkylgruppe mit 7 bis 14 Kohlenstoffatomen sind, und
(b) eine Mischung von Cokatalysatoren, umfassend modifiziertes Methylaluminoxan (m-MAO) und Triisobutylaluminium (TIBA).

2. Copolymerisationsverfahren nach Anspruch 1, wobei das Molverhältnis zwischen m-MAO und Katalysator gleich oder größer als 50 ist.

3. Copolymerisationsverfahren nach Anspruch 1, wobei das Molverhältnis zwischen TIBA und Katalysator größer als 10:1 ist.

4. Copolymerisationsverfahren nach Anspruch 1, wobei R¹ und R³, gleich oder verschieden voneinander, eine lineare oder verzweigte Alkylgruppe mit 1 bis 6 Kohlenstoffatomen sind.

5. Copolymerisationsverfahren nach Anspruch 1, wobei R¹ und R³, gleich oder verschieden voneinander, eine lineare oder verzweigte Alkylgruppe sind, ausgewählt aus der Gruppe bestehend aus Methyl, Ethyl, Propyl, Isopropyl, Butyl, Isobutyl, tert.-Butyl, Pentyl, Isopentyl, 2-Methylbutan-2-yl, 1-Hexyl, 2-Methylpentan-2-yl, 3-Methylpentan-3-yl und Isohexyl.

6. Copolymerisationsverfahren nach Anspruch 1, wobei R² und R⁴, gleich oder verschieden voneinander, eine lineare oder verzweigte Arylalkylgruppe mit 7 bis 10 Kohlenstoffatomen sind.

7. Copolymerisationsverfahren nach Anspruch 1, wobei R² und R⁴, gleich oder verschieden voneinander, eine lineare oder verzweigte Arylalkylgruppe sind, ausgewählt aus der Gruppe bestehend aus den Verbindungen der allgemeinen Formel (II), 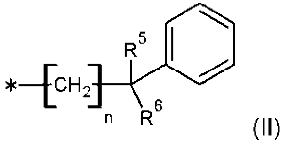 wobei R⁵ und R⁶, gleich oder verschieden voneinander, Wasserstoff oder eine lineare oder verzweigte Alkylgruppe mit 1 bis 3 Kohlenstoffatomen sind und n eine ganze Zahl von 0 bis 3 ist, vorausgesetzt, dass die Gesamtzahl der Kohlenstoffatome der Verbindungen der allgemeinen Formel (II) 7 bis 10 beträgt.

8. Copolymerisationsverfahren nach Anspruch 1, wobei der Katalysator in einer Menge im Bereich von 0,0001 bis 0,01 Mol-%, bezogen auf das Gesamtmolgewicht von Butadien und Styrol und/oder substituiertem Styrol, vorliegt.

9. Copolymerisationsverfahren nach Anspruch 1, wobei die Lösung eine Gesamtkonzentration an Butadien und Styrol und/oder substituiertem Styrol von mindestens 2 Gew.-%, bezogen auf das Gesamtgewicht der Lösung, umfasst.

10. Reifen für Fahrzeugräder, umfassend ein vernetztes Elastomermaterial, das durch Vernetzen einer vernetzbaren Elastomerverbindung erhalten wird, wobei die vernetzbare Elastomerverbindung ein Copolymer umfasst, das nach dem Verfahren gemäß einem der Ansprüche 1 bis 9 erhalten wird.

11. Reifen nach Anspruch 10, wobei der Reifen umfasst:
- eine Karkassenstruktur mit gegenüberliegenden Seitenrändern, die jeweiligen Wulststrukturen zugeordnet sind;
- optional eine Gürtelstruktur, die in einer radial äußeren Position in Bezug auf die Karkassenstruktur angebracht ist;
- ein Laufflächenband, das in einer radial äußeren Position in Bezug auf die Karkasse und/oder Gürtelstruktur angebracht ist.

12. Reifen nach einem der Ansprüche 10 und 11, wobei die Elastomermischung zur Herstellung des Laufflächenbandes verwendet wird.

13. Reifen nach einem der Ansprüche 10 bis 12, wobei die Elastomerverbindung eine Menge des Copolymers im Bereich von 1 bis 30 phr umfasst.

14. Reifen nach einem der Ansprüche 10 bis 13, wobei das Copolymer eine Molekülmasse von weniger als 500.000 aufweist.

15. Reifen nach einem der Ansprüche 10 bis 14, wobei das Copolymer einen Butadiengehalt im Bereich von 30 bis 90 Gew.-%, bezogen auf das Gesamtgewicht des Copolymers, und einen Gehalt an Styrol und/oder substituiertem Styrol im Bereich von 10 bis 70 Gew.-%, bezogen auf das Gesamtgewicht des Copolymers, aufweist.

## Revendications

1. Procédé de copolymérisation de butadiène et de styrène et/ou styrène substitué comprenant (i) la préparation d'une solution de butadiène et de styrène et/ou styrène substitué dans un solvant, (ii) l'ajout d'un système catalytique homogène à ladite solution, (ii) la réalisation de la réaction de copolymérisation à une température allant de 30°C à 100°C pendant 12 heures ou moins, et (iv) la récupération du copolymère résultant,
**caractérisé en ce que**,
ledit solvant est choisi dans le groupe d'hydrocarbures aliphatiques et cycloaliphatiques, et
ledit système catalytique homogène comprend
(a) un catalyseur de formule générale (I) 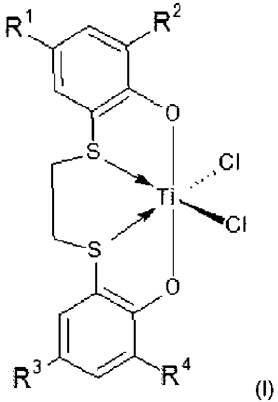 dans laquelle R¹ et R³, identiques ou différents l'un de l'autre, représentent un groupe alkyle linéaire ou ramifié comportant de 1 à 10 atomes de carbone, et R² et R⁴, identiques ou différents l'un de l'autre, représentent un groupe arylalkyle linéaire ou ramifié comportant de 7 à 14 atomes de carbone, et
(b) un mélange de cocatalyseurs comprenant du méthylaluminoxane modifié (m-MAO) et du trisobutylaluminium (TIBA).

2. Procédé de copolymérisation selon la revendication 1, dans lequel le rapport molaire entre ledit m-MAO et ledit catalyseur est supérieur ou égal à 50.

3. Procédé de copolymérisation selon la revendication 1, dans lequel le rapport molaire entre ledit TIBA et ledit catalyseur est supérieur à 10:1.

4. Procédé de copolymérisation selon la revendication 1, dans lequel R¹ et R³, identiques ou différents l'un de l'autre, représentent un groupe alkyle linéaire ou ramifié comportant de 1 à 6 atomes de carbone.

5. Procédé de copolymérisation selon la revendication 1, dans lequel R¹ et R³, identiques ou différents l'un de l'autre, représentent un groupe alkyle linéaire ou ramifié choisi dans le groupe constitué par le méthyle, l'éthyle, le propyle, l'isopropyle, le butyle, l'isobutyle, le tert-butyle, le pentyle, l'isopentyle, le 2-méthyl-butan-2-yle, le 1-hexyle, le 2-méthylpentan-2-yle, le 3-méthyl-pentan-3-yle et l'isohexyle.

6. Procédé de copolymérisation selon la revendication 1, dans lequel R² et R⁴, identiques ou différents l'un de l'autre, représentent un groupe arylalkyle linéaire ou ramifié comportant de 7 à 10 atomes de carbone.

7. Procédé de copolymérisation selon la revendication 1, dans lequel R² et R⁴, identiques ou différents l'un de l'autre, représentent un groupe arylalkyle linéaire ou ramifié choisi dans le groupe constitué par les composés de formule générale (II) 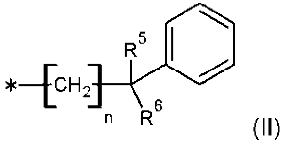 dans laquelle R⁵ et R⁶, identiques ou différents l'un de l'autre, représentent l'hydrogène ou un groupe alkyle linéaire ou ramifié comportant de 1 à 3 atomes de carbone, et n est un nombre entier de 0 à 3, à condition que le nombre total d'atomes de carbone desdits composés de la formule générale (II) est de 7 à 10.

8. Procédé de copolymérisation selon la revendication 1, dans lequel ledit catalyseur est présent en une quantité allant de 0,0001% à 0,01% en mole, par rapport au poids molaire total dudit butadiène et dudit styrène et/ou styrène substitué.

9. Procédé de copolymérisation selon la revendication 1, dans lequel ladite solution comprend une concentration totale de butadiène et de styrène et/ou styrène substitué supérieure ou égale à 2% en poids par rapport au poids total de ladite solution.

10. Pneu pour roues de véhicule comprenant un matériau élastomère réticulé obtenu par réticulation d'un composé élastomère réticulable, dans lequel ledit composé élastomère réticulable comprend un copolymère obtenu par le procédé selon l'une quelconque des revendications 1 à 9.

11. Pneu selon la revendication 10, dans lequel ledit pneu comprend :
- une structure de carcasse, présentant des bords latéraux opposés associés à des structures de talon respectives ;
- éventuellement, une structure de ceinture appliquée dans une position radialement externe par rapport à ladite structure de carcasse ;
- une bande de roulement appliquée dans une position radialement externe par rapport à ladite structure de carcasse et/ou de ceinture.

12. Pneu selon l'une quelconque des revendications 10 et 11, dans lequel ledit composé élastomère est utilisé pour la production de ladite bande de roulement.

13. Pneu selon l'une quelconque des revendications 10 à 12, dans lequel ledit composé élastomère comprend une quantité dudit copolymère allant de 1 à 30 phr.

14. Pneu selon l'une quelconque des revendications 10 à 13, dans lequel ledit copolymère présente un poids moléculaire inférieur à 500000.

15. Pneu selon l'une quelconque des revendications 10 à 14, dans lequel ledit copolymère présente une teneur en butadiène allant de 30% à 90% en poids par rapport au poids total du copolymère, et une teneur en styrène et/ou styrène substitué allant de 10% à 70% en poids par rapport au poids total du copolymère.
